# EUROPÄISCHE PATENTSCHRIFT

(11) **EP 0 307 535 B1**
(45) Veröffentlichungstag und Bekanntmachung des Hinweises auf die Patenterteilung: **13.10.1993**
(21) Anmeldenummer: 88102135.6
(22) Anmeldetag: 23.08.1984
(51) Int. Cl.: B29C 59/04

(54) **Verfahren zum kontinuierlichen Prägen der Oberfläche einer vorgefertigten, kalten thermoplastischen Kunststoffolie unter Wärme und Druck mittels einer Prägewalze**
Method for continuous embossing the surface of a cold prefabricated thermoplastic sheet by heat and pressure using an embossing roller
Procédé pour le gauffrage continu de la surface d'une feuille préfabriquée, refroidie, en matière thermoplastique, par chauffage et pression en utilisant un rouleau de gauffrage

(30) Priorität: 14.09.1983 DE 3333179; 20.02.1984 DE 3405985
(43) Veröffentlichungstag der Anmeldung: 22.03.1989
(62) Teilanmeldung aus: 84110052.2
(73) Patentinhaber: J. H. Benecke AG, D-30419 Hannover (DE)
(72) Erfinder: Böttcher, Hugo, D-3000 Hannover 71 (DE); Heimrich, Klaus, D-3008 Garbsen 6 (DE); Hildebrandt, Gustav, D-3262 Auetal (DE); Kracke, Heinrich, Dr., D-3160 Lehrte (DE); Richter, Johannes, D-3100 Celle (DE)
(74) Vertreter: Leine, Sigurd, Dipl.-Ing.

(56) Entgegenhaltungen:
- EP-A- 0 048 948
- DE-A- 2 401 292
- DE-B- 1 071 937
- DE-B- 1 161 002
- FR-A- 2 210 512
- FR-A- 2 296 506
- GB-A- 776 986
- US-A- 2 928 124
- US-A- 3 024 154

## Beschreibung

Die Erfindung betrifft ein Verfahren der im Oberbegriff des Anspruchs 1 genannten Art.

Das kontinuierliche Prägen von thermoplastischem Kunststoff unter Wärme und Druck mittels einer Prägewalze aus Silicongummi ist durch die gattungsgemäße AT-PS 228 476 bekannt. Durch die Verwendung einer Prägewalze aus Silicongummi ist an sich ein kontinuierlicher Prägevorgang möglich, jedoch führt die Verwendung des Silicongummis als Prägeoberfläche, insbesondere bei einem schnellaufenden Prägevorgang, zu Schwierigkeiten, da die Prägezeit verhältnismäßig kurz und das Silicongummi verhältnismäßig weich ist.

Durch die DE-OS 21 41 613 ist es bekannt, aus einer Düse austretendes, noch weiches Bandmaterial aus thermoplastischem Kunststoff mittels eines Walzenpaares zu prägen. Die Oberfläche des Bandmaterials hat hierbei jedoch eine Temperatur, die ein Eindringen des Bandmaterials in feine Poren der Prägeoberfläche der Prägewalzen ausschließt, zumal sich die Oberfläche des Bandmaterials nach dem Austritt aus der Düse durch Wärmestrahlung schnell etwas abkühlt, wodurch die Fließfähigkeit verringert wird. Eine exakte Übertragung der von einer natürlichen Vorlage, beispielsweise Naturleder, abgenommenen Prägeoberfläche einer Prägewalze aus Silicongummi ist daher nicht möglich.

Durch US-A-2 928 124 ist ein Verfahren der betreffenden Art bekannt, bei dem die zu prägende Kunststoffolie in einem Vorwärmer vorerwärmt wird, und zwar auf eine Temperatur, die unterhalb der Prägetemperatur liegt. Nach dieser Vorerwärmung erfolgt eine Schlußerwärmung auf die Prägetemperatur in einer langen Kammer, in der die Kunststoffolie über eine lange Wegstrecke frei von einem von unten wirkenden Luftkissen gegen den Druck eines von oben wirkenden Luftkissens getragen ist. Die Luft der Luftkissen hat die zum Prägen erforderliche Temperatur, die sich auf die Folie übertragen soll. Der Wärmeübergang von Luft zu der Folie ist verhältnismäßig schlecht, so daß die Durchlaufstrecke durch den durch eine Kammer gebildeten Schlußerhitzer verhältnismäßig lang ist. Somit erfolgt die endgültige Erwärmung der Folie auf die Prägetemperatur langsam, und aufgrund der viel besseren Wärmeleitfähigkeit der Folie selbst gleichen sich eventuell auftretende Wärmeunterschiede im Querschnitt der Folie aus, so daß die Temperatur quer über dem Querschnitt der Folie praktisch gleich ist, wenn die Folie den Prägespalt erreicht. Dies gilt auch für den Fall, wenn, wie in dieser Schrift angegeben, die Temperatur des Luftkissens auf der der Prägeseite der Folie abgewandten Seite etwas niedriger ist als die der Luft auf der Prägeseite. Aufgrund der besseren Wärmeleitfähigkeit der Folie im Verhältnis zu der angrenzenden Luft können sich keine merklichen Temperaturunterschiede über den Querschnitt der Folie ausbilden. Damit ist aber die Erwärmung der Folie auf Temperaturen begrenzt, bei denen sie noch eine ausreichende Festigkeit hat, um bis zum Einlauf in den Walzenspalt handhabbar zu bleiben. Solche Temperaturen ermöglichen nicht die Verwendung einer Siliconprägewalze, damit diese ihre feinkonturierte Prägeoberfläche in die Oberfläche der zu prägenden Folie einprägen kann.

Der Erfindung liegt die Aufgabe zugrunde, ein Verfahren der betreffenden Art anzugeben, das es ermöglicht, die Prägung mit einer Prägewalze durchzuführen, deren Prägeoberfläche aus Silicongummi besteht, derart, daß der Prägevorgang möglichst schnell abläuft, die Prägeoberfläche unbeschädigt bleibt und gleichzeitig die Prägung mit möglichst hoher Exaktheit erfolgt.

Die der Erfindung zugrundeliegende Aufgabe wird durch die im Kennzeichen des Anspruchs 1 angegebene Lehre gelöst.

Temperaturen der angegebenen Höhe führen zu einer derartigen Erweichung bis hin zu einer Verflüssigung der zu prägenden Oberfläche der thermoplastischen Kunststoffolie, daß der thermoplastische Kunststoff selbst in feinste Vertiefungen der Prägeoberfläche der Prägewalze aus Silicongummi eindringt und somit die Prägestruktur exakt übertragen wird. Nach einer anschließenden Abkühlung kann die geprägte thermoplastische Folie von der Prägewalze abgezogen werden, wobei wegen der Elastizität des Silicongummis die Prägeoberfläche der Prägewalze nicht beeinträchtigt wird.

Vorteilhafte Weiterbildungen der grundlegenden Lehre sind in den Unteransprüchen angegeben. Sie sind in dem nach folgenden Beispiel für die Ausführung des erfindungsgemäßen Verfahrens erläutert.

### Beispiel

Es wird eine Prägewalze zum kontinuierlichen Prägen von thermoplastischer Folie mittels einer Vorlage aus natürlichem Leder, Textil oder dergleichen hergestellt. Mit dieser Prägewalze wird eine vorgefertigte thermoplastische Folie geprägt, die aus einer Deckschicht und einer darunterliegenden Unterschicht besteht. Die thermoplastische Folie wird auf eine Temperatur von 180°-250°C, je nach dem verwendeten Material, erwärmt. Bei dieser Temperatur hat die Deckschicht der thermoplastischen Folie eine hohe Fließfähigkeit und dringt daher in die feinen Konturen der Prägeoberfläche der Prägewalze ein. Die Deckschicht weist außerdem einen Weichmacher aus einem Hochpolymer auf. Die Unterschicht hat bei der genannten Prägetemperatur eine geringere Fließfähigkeit. Nach dem Prägen erfolgt eine Kühlung und ein Abziehen der geprägten thermoplastischen Folie von der Prägewalze.

## Patentansprüche

1. Verfahren zum kontinuierlichen Prägen der Oberfläche einer vorgefertigten, thermoplastischen Kunststoffolie unter Wärme und Druck mittels einer unbeheizten Prägewalze, deren Oberfläche eine Negativform einer zu prägenden Narbung aufweist, **dadurch gekennzeichnet,** daß eine Prägewalze verwendet wird, die wenigstens im Bereich ihrer Umfangsfläche aus Silicongummi besteht, daß die thermoplastische Folie aus kaltem Zustand nur auf der zu prägenden Seite unmittelbar auf die für das Prägen erforderliche Temperatur erwärmt wird und daß diese Erwärmung auf eine Temperatur von wenigstens 150°C, vorzugsweise 180 - 250°C erfolgt.

2. Verfahren nach Anspruch 1, **dadurch gekennzeichnet,** daß eine thermoplastische Folie aus einem Kunststoff verwendet wird, der einen Weichmacher aufweist, der ein Hochpolymer, ein geradlinig langkettiger Alkohol, ein weichmachendes Polymer oder eine Kombination aus diesen Stoffen ist.

3. Verfahren nach Anspruch 1, **dadurch gekennzeichnet,** daß eine thermoplastische Folie verwendet wird, die im Bereich der zu prägenden Oberfläche eine Deckschicht aufweist, deren Viskosität bei der Prägetemperatur niedriger ist als eine darunterliegende Unterschicht der Folie.

4. Verfahren nach Anspruch 3, **dadurch gekennzeichnet,** daß die Deckschicht bei der Prägung mit der Unterschicht verbunden wird.

## Claims

1. A process for continuously embossing the surface of a prefabricated thermoplastic sheet by heat and pressure by means of an unheated embossing roller, the surface of which has a negative shape of a grain to be embossed,
**characterised in that** an embossing roller is used, which at least in the region of its peripheral surface is made of silicon rubber,
**in that** the thermoplastic sheet is heated from the cold state only on the side to be embossed directly to the temperature required for embossing,
**and in that** this heating is performed to a temperature of at least 150°C, preferably 180 - 250°C.

2. A process according to Claim 1,
**characterised in that** a thermoplastic sheet is used which made from a plastic comprising a softener which is a high polymer, a rectilinear long-chain alcohol, a softening polymer or a combination of these materials.

3. A process according to Claim 1,
**characterised in that** a thermoplastic sheet is used, which in the region of the surface to be embossed comprises an outer layer, the viscosity of which at the embossing temperature is less than that of a lower layer of the sheet which is underneath it.

4. A process according to Claim 3,
**characterised in that** the outer layer is connected to the lower layer during embossing.

## Revendications

1. Procédé pour le gaufrage continu de la surface d'une feuille préfabriquée en matière synthétique thermoplastique par chauffage et pression au moyen d'un rouleau de gaufrage non chauffé dont la surface présente une forme négative d'un grainage à imprimer,
caractérisé en ce qu'on utilise un rouleau de gaufrage qui est constitué, au moins dans la zone de sa surface périphérique, par un caoutchouc siliconé, que la feuille thermoplastique n'est chauffée depuis l'état froid que sur la face à gaufrer directement à la température nécessaire pour le gaufrage et que ce chauffage est effectué à une température d'au moins 150°C, de préférence de 180-250°C.

2. Procédé selon la revendication 1,
caractérisé en ce qu'on utilise une feuille thermoplastique en une matière synthétique qui présente un plastifiant qui est un haut polymère, un alcool à chaîne longue rectiligne, un polymère plastifiant ou une combinaison d'un de ces matériaux.

3. Procédé selon la revendication 1,
caractérisé en ce qu'on utilise une feuille thermoplastique qui présente, dans la zone de la surface à gaufrer, une couche de protection dont la viscosité est inférieure, à la température de gaufrage, à celle d'une sous-couche de la feuille se trouvant en-dessous.

4. Procédé selon la revendication 3,
caractérisé en ce que la couche de protection est reliée à la sous-couche lors du gaufrage.
